# EUROPEAN PATENT SPECIFICATION

(11) **EP 1 830 221 B1**
(45) Date of publication and mention of the grant of the patent: **12.05.2010**
(21) Application number: 06119031.0
(22) Date of filing: 16.08.2006
(51) Int. Cl.: G02C 5/00, G02C 11/06

(54) **Eyeglasses With A Wireless Transceiver System**
Brillen mit drahtlosem Sendeempfangssystem
Lunettes avec système d'émission-réception sans fil

(30) Priority: 02.03.2006 CN 200620004790 U
(43) Date of publication of application: 05.09.2007
(73) Proprietor: Huang, Hsueh Yu, Yonghe T'ai pei (TW)
(72) Inventor: Huang, Hsueh Yu, Yonghe T'ai pei (TW)
(74) Representative: Viering, Jentschura & Partner

(56) References cited:
- FR-A1- 2 588 673
- US-A- 4 951 322
- US-A- 5 189 447
- US-A- 5 594 511
- US-A1- 2002 159 023
- US-A1- 2005 159 182
- US-B1- 6 582 075

## Description

### BACKGROUND OF THE INVENTION

### 1. Field of the Invention:

The present invention relates to eyeglasses and more particularly, to a pair of eyeglasses with a wireless transceiver system.

### 2. Description of the Related Art:

Following fast development of human economic activities, short distance wireless communication technology has been receiving more and more people's attention. Various wireless transceiver systems including wireless communication systems, bluetooth systems, wireless Internet systems, radios, and etc, of low cost and low power consumption have been disclosed and have appeared on the market. Regular wireless communication systems may also provide a voice data transmission function.

Nowadays, various compact hand-free communication and wireless voice transmission systems are commercially available. These compact hand-free communication and wireless voice transmission systems can be directly carried on the user's ear for use. When a wireless communication signal is coming, the user can communicate with the person at the remote side wirelessly without touching any button.

However, it is inconvenient to a person carrying a pair of eyeglasses to use an ear mount type wireless communication system. When putting a wireless communication system one the ear that carries a pair of eyeglasses, the ear bears much pressure and will feel uncomfortable.

US 4,951,322 discloses a detachable mono-glass sports goggles, including: a curved rod-like spectacle frame having a hole made thereon in the center; two bows respectively connected to said spectacle frame at both ends by means of screws; a unitary glass having a hole made thereon at a position opposite to the hole of said spectacle frame; and a nose piece comprising a split pin unitarily made thereon at the back side at an upper position for insertion through the hole of said unitary glass into the hole of said spectacle frame to allow said unitary glass to be firmly and detachably attached to said spectacle frame.

FR 2 588 673 discloses sunglasses having glass and an upper frame, which upper frame is made from synthetic resin. In the upper frame there is provided a groove or slot, respectively, which is designed such as to receive and hold a portion of the upper edge of the glass.

US 2002/0159023 A1 discloses an eyewear comprising a transceiver for short-distance wireless communication, said transceiver being capable of forming an ad hoc wireless network with a plurality of devices.

US 2005/0159182 A1 discloses a wireless communication glasses comprising: a pair of glasses having a lens frame and a temple connecting with the lens frame; a wireless communication transceiver having a data cable connecting to a mobile phone for receiving signals from the mobile phone or transmitting signals to the mobile phone; a wireless module assembles on the temple of the pair of glasses for receiving signals from the wireless communication transceiver and transmitting signals to the wireless communication transceiver; an earphone receiving the signals from the wireless transceiver module and assembled to the temple of the glasses so as to bring the earphone into proximity with an ear of a user; and a microphone transmitting the signals to the wireless transceiver module and assembled on the temple of the pair of glasses.

### SUMMARY OF THE INVENTION

According to the present invention, there is provided a pair of eyeglasses as claimed in claim 1. Some further examples for such a pair of eyeglasses can be seen from the sublclaims.

The present invention has been accomplished under the circumstances in view. It is the main object of the present invention to provide a pair of eyeglasses that carries a wireless transceiver for short distance wireless communication. The wireless transceiver can be a regular wireless communication system, bluetooth system, wireless Internet system, or radio.

To achieve this and other objects of the present invention, the eyeglasses comprises an eyeglass frame, the eyeglass frame having a mounting groove at one side thereof, two coupling endpieces respectively extended from two distal ends thereof, a plughole on a middle part thereof adjacent to one side of the mounting groove, and a mounting through hole extending across the mounting groove in communication with one end of the plughole; two temples, the temples each having a front end, a rear end opposite to the front end, a coupling block extending from the front end and respectively pivotally coupled to the coupling endpieces of the eyeglass frame, and a recessed receiving hole near the rear end; a nose unit fastened to the plughole of the eyeglass frame, the nose unit having a through hole; a screw mounted in the mounting through hole of the eyeglass frame and the through hole of the nose unit to secure the nose unit to the eyeglass frame; an eyeglass lens, the eyeglass lens having a ridge inserted into the mounting groove of the eyeglass frame, a retaining notch formed on a middle part of the ridge and forced into engagement with the screw, and two engagement protrusions respectively extending from two distal ends of the ridge and respectively forced into engagement with two distal ends of the mounting groove of the eyeglass frame; and a wireless transceiver mounted on one of the temples.

### BRIEF DESCRIPTION OF THE DRAWINGS

FIG. 1 is an exploded view of a pair of eyeglasses with a wireless transceiver in accordance with the present invention.
FIG. 2 is an elevational assembly view of the eyeglasses according to the present invention.
FIG. 3 is an enlarged view of a part of FIG. 1, showing the relationship between one coupling endpiece of the eyeglass frame and the coupling block of the associating temple.
FIG. 4 is an enlarged view of a part of FIG. 1, showing the relationship between the eyeglass lens and the eyeglass frame.
FIG. 5 is an exploded view in an enlarged scale of a part of FIG. 1, showing the structure of the nose unit.
FIG. 6 is a schematic sectional view showing the assembly process of the eyeglass lens and the eyeglass frame according to the present invention (I).
FIG. 7 is a schematic sectional view showing the assembly process of the eyeglass lens and the eyeglass frame according to the present invention (II).
FIG. 8 is a schematic sectional view showing the assembly process of eyeglass frame and the temple according to the present invention (I).
FIG. 9 is a schematic sectional view showing the assembly process of eyeglass frame and the temple according to the present invention (II).
FIG. 10 is a schematic sectional view showing the assembly process of eyeglass frame and the temple according to the present invention (III).
FIG. 11 is a schematic sectional view showing the assembly process of eyeglass frame and the temple according to the present invention (IV).
FIG. 12 is a schematic sectional view showing the assembly process of eyeglass frame and the temple according to the present invention (V).
FIG. 13 illustrates a supplementary eyeglass assembly fastened to the nose unit according to the present invention.
FIG. 14 is an exploded view in an enlarged scale of a part of FIG. 13.
FIG. 15 is an assembly view of FIG. 14.
FIG. 16 is a schematic drawing showing the eyeglasses worn on the user's ears according to the present invention.
FIG. 17 illustrates the arrangement of the eyeglasses without the wireless transceiver according to the present invention.

### DETAILED DESCRIPTION OF THE PREFERRED EMBODIMENT

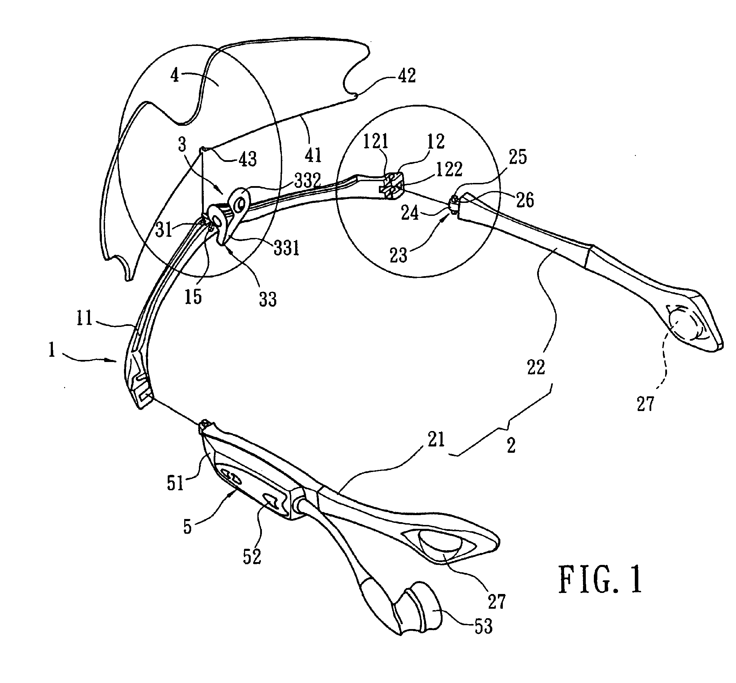

Referring to FIGS. 1∼4, a pair of eyeglasses in accordance with the present invention is shown comprising an eyeglass frame **1,** a temple set **2** pivoted to the frame **1,** a nose unit **3** coupled to the frame **1,** a glass lens **4** fastened to the frame **1,** and a wireless transceiver **5** arranged on the temple set **2.**

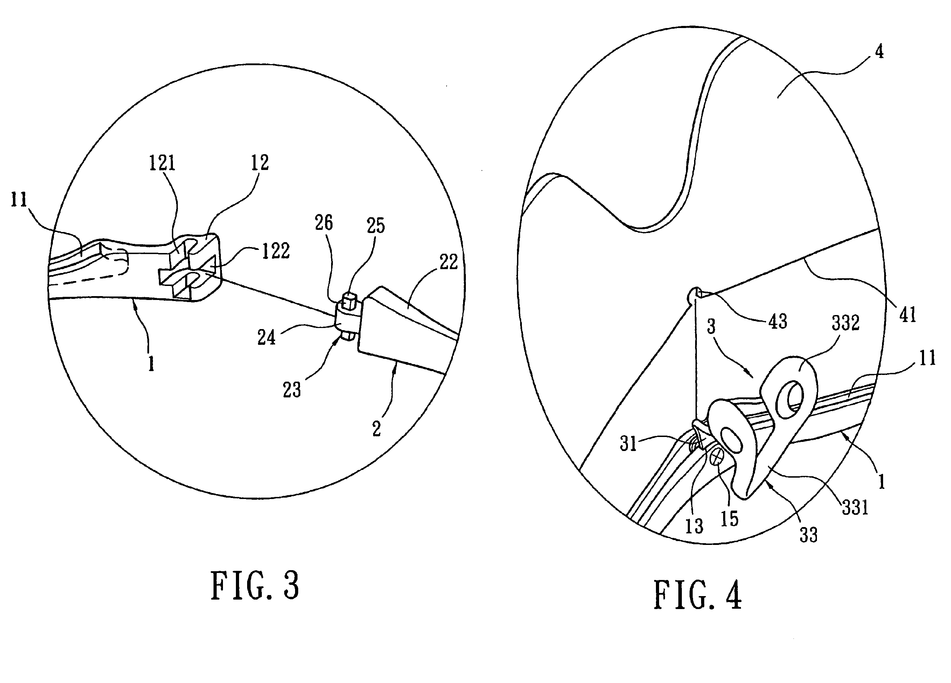

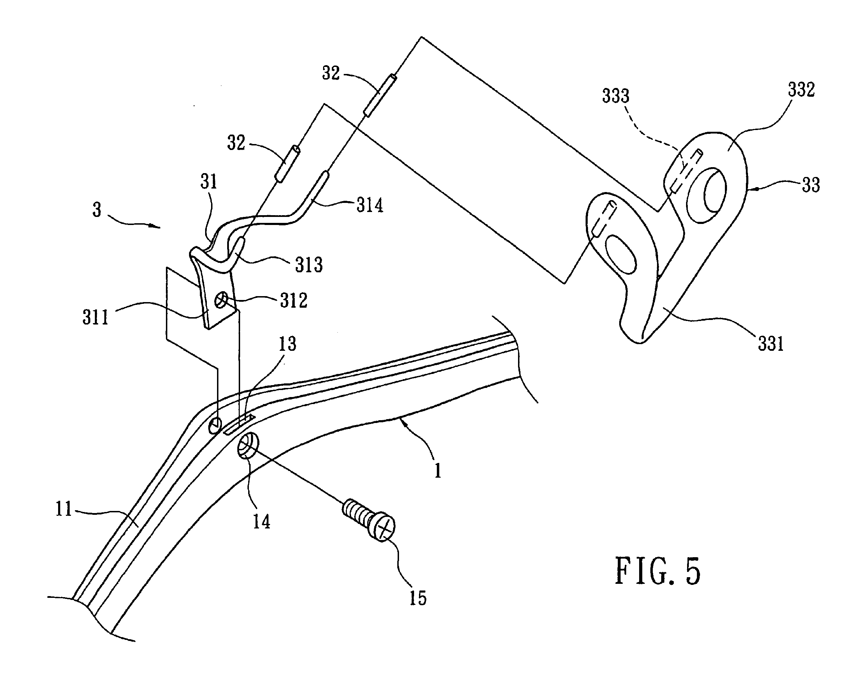

The eyeglass frame **1** is a smoothly arched bar molded from a flexible plastic material, having a mounting groove **11** on the bottom side thereof for the positioning of the glass lens **4,** two coupling endpieces **12** respectively disposed at the two distal ends thereof for receiving the temple set **2,** a plughole **13** vertically disposed on the middle of the bottom side adjacent to the mounting groove **11** (see FIG. 4), and a horizontal mounting through hole **14** extending across the mounting groove **11** in communication with the plughole **13** (see FIG. 4 and also FIG. 5) for the mounting of the nose **3.** Each coupling endpiece **12** has a vertical coupling hole **121,** and a transverse coupling hole **122** across the vertical coupling hole **121.** The vertical coupling hole **121** tilts at a predetermined angle.

The temple set **2** is comprised of a first temple **21** and a second temple **22.** The first temple **21** and the second temple **22** are symmetrical, each having a coupling block **23** forwardly protruded from the front end. The coupling block **23** comprises a horizontal base **24,** and two vertical pivot pins **25** vertically aligned at the top and bottom sides of the horizontal base **24.** The vertical pivot pins **25** are cylindrical pivots each having two cut planes **26** at two opposite sides. By means of the cut planes **26,** the coupling block **23** can easily be coupled to one coupling endpiece **12** of the eyeglass frame **1.** Each temple **21** or **22** further has a recessed receiving hole **27** near the rear end for receiving an earphone **53** of the wireless transceiver **5.** Further, by means of the respective coupling blocks **23,** the first temple **21** and the second temple **22** are detachably and exchangeably coupled to the coupling endpieces **12** of the eyeglass frame **1.**

The nose unit **3** is mounted in the plughole **13** of the eyeglass frame **1,** and a screw **15** is fastened to the horizontal mounting through hole **14** of the eyeglass frame **1** to secure the nose unit **3** and the eyeglass frame **1** together. The nose unit **3** is adjustable in width and height (this adjustment feature will be described further).

The eyeglass lens **4** is a single-piece thermoplastic sunglass lens mounted with the ridge (top edge) thereof into the mounting groove **11** of the eyeglass frame **1,** having a retaining notch **43** formed on the middle of the ridge and forced into engagement with the screw **15** and two engagement protrusions **42** respectively extending from the two distal ends of the ridge and respectively forced into engagement with the two distal ends of the mounting groove **11** of the eyeglass frame **1.**

The wireless transceiver **5** comprises a casing **51** selectively directly formed integral with one of the two temples **21** and **22** of the temple set **2,** a set of control switches **52** mounted on the casing **51** for power on/off and voice volume controls, and the aforesaid earphone **53** extending out of the casing **51.** The casing **51** houses a wireless transmitter receiver chip, a rechargeable battery, a microphone, and a battery charger (not shown). When the user carries the eyeglasses on the ears around the eyes, the user can insert the earphone **53** into the associating ear. When not in use, the user can set the earphone **53** into the recessed receiving hole **27.**

Referring to FIG. 5, the nose unit **3** comprises a metal bracket **31,** two sleeves **32,** and a nose **33.** The metal bracket **31** comprises a base frame **311** inserted into the plughole **13** of the eyeglass frame **1,** a through hole **312** cut through the base frame **311** for the passing of the screw **15,** and two support rods **313** and **314** respectively symmetrically extending from the top side of the base frame **311.** The two sleeves **32** are molded from polycarbonate resin and respectively sleeved onto the support rods **313** and **314.** The nose **33** is made out of rubber, having a middle saddle **331** for bridging the user's nose, and two nose pads **332** respectively formed integral with the two ends of the middle saddle **311.** The two nose pads **332** each have a coupling hole **333** respectively coupled to the sleeves **32** on the support rods **313** and **314** of the bracket **31.** By means of the design of the bracket **31,** sleeves **32** and nose **33,** the user can adjust the width and height of the nose unit to fit the user's nose.

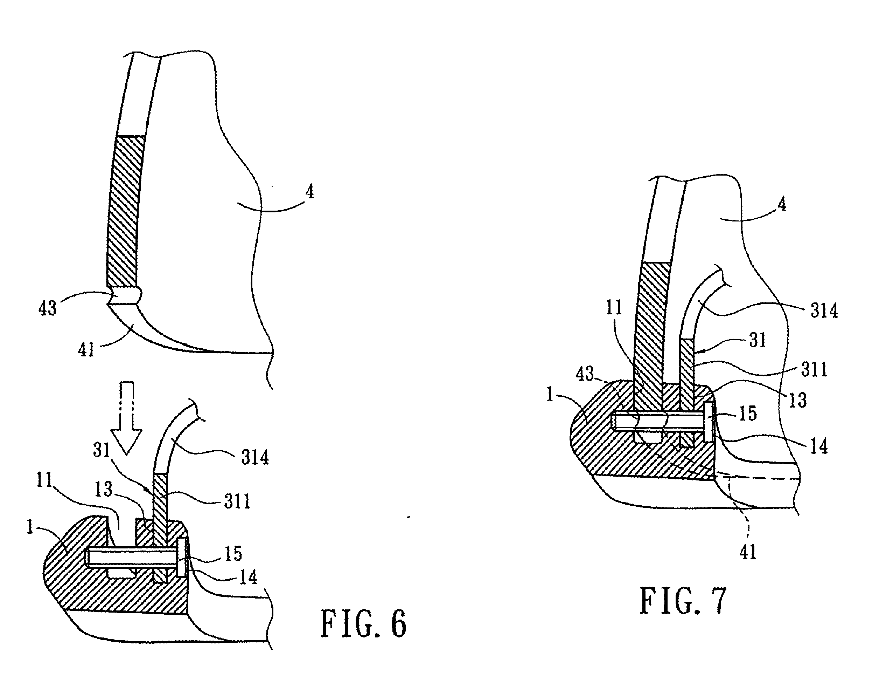

Referring to FIGS. 6 and 7, when inserting the ridge of the eyeglass lens **4** into the mounting groove **11** of the eyeglass frame **1,** the retaining notch **43** is forced into engagement with the screw **15** that is mounted in the mounting through hole **14** of the eyeglass frame **1,** and therefore the eyeglass lens **4** is secured to the eyeglass frame **1.** By pulling the eyeglass lens **4** outwards from the eyeglass frame **1** to disengage the retaining notch **43** from the screw **15,** the eyeglass lens **4** is disconnected from the eyeglass frame **1** for a replacement. Further, different colors of eyeglass lenses may be prepared for selection so that the user can selectively attach the desired color of eyeglass lens to the eyeglass frame **1.**

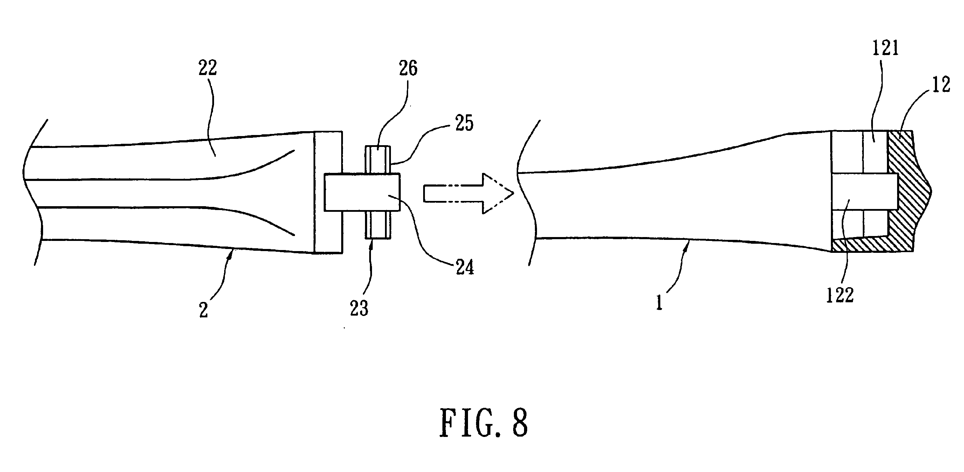

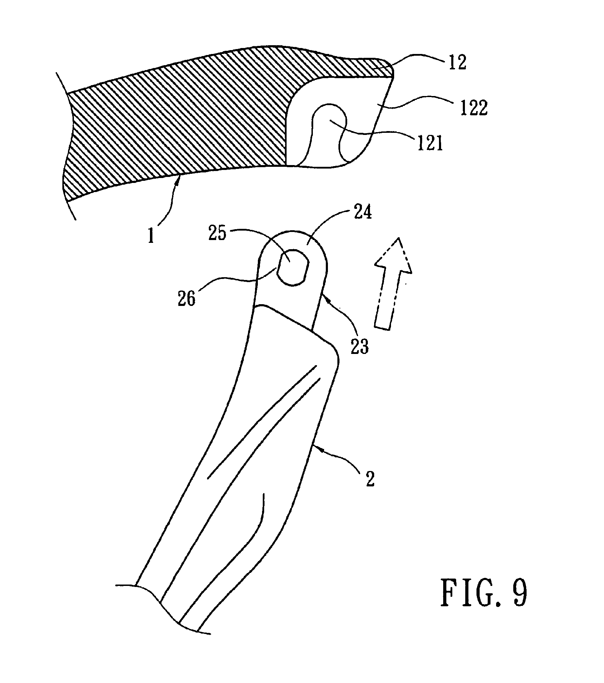

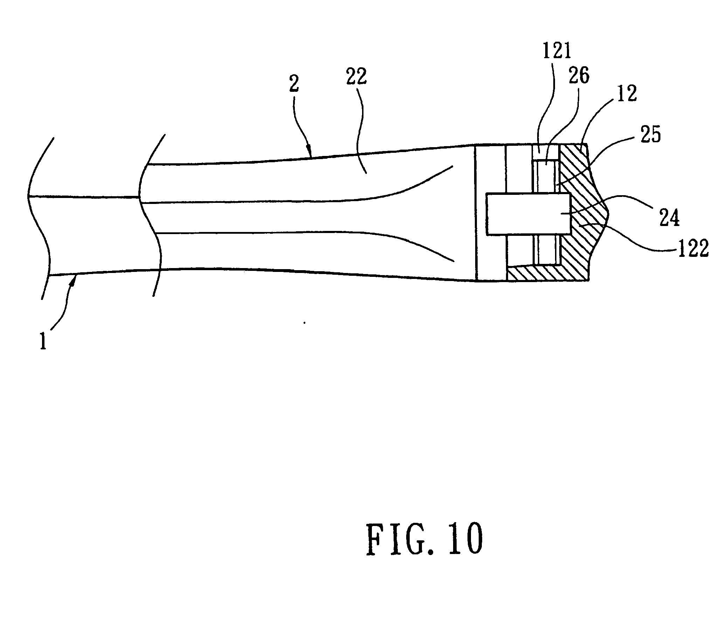

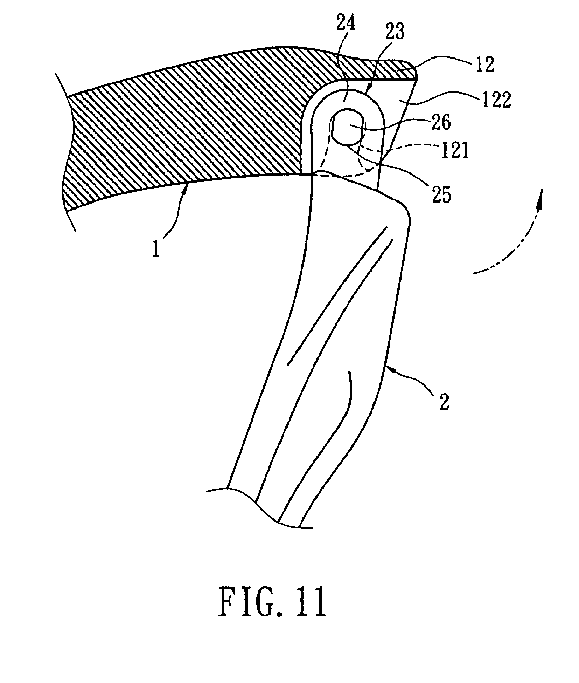

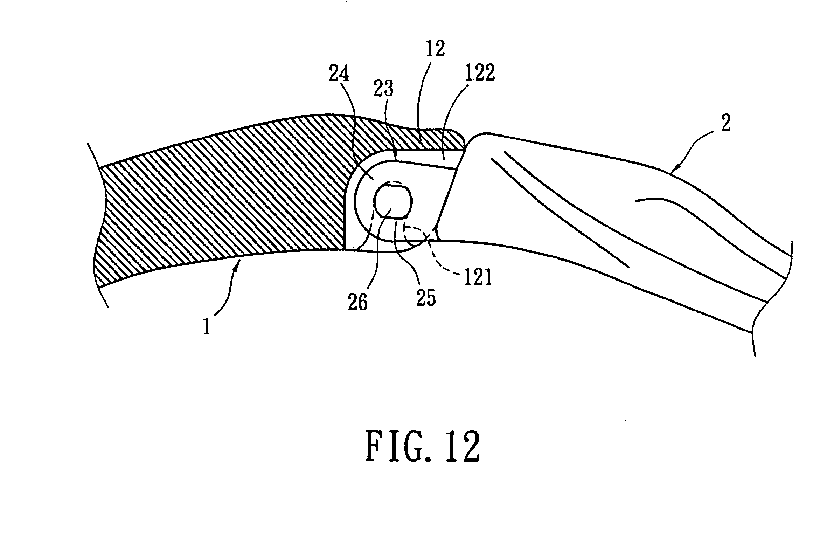

Referring to FIGS. 8~12, the coupling block **23** of the temple **21** or **22** is inserted into one coupling endpiece **12** of the eyeglass frame **1** at an angle to force the horizontal base **24** and vertical pivot pins **25** of the coupling block **23** into the horizontal coupling hole **122** and vertical coupling hole **121** of the associating coupling endpiece **12,** and then the temple **21** or **22.** After the two temples **21** and **22** have been respectively coupled to the coupling endpieces **12** of the eyeglass frame **1**, the temples **21** and **22** are respectively turned outwards to the extended position and respectively attached to the user's ears.

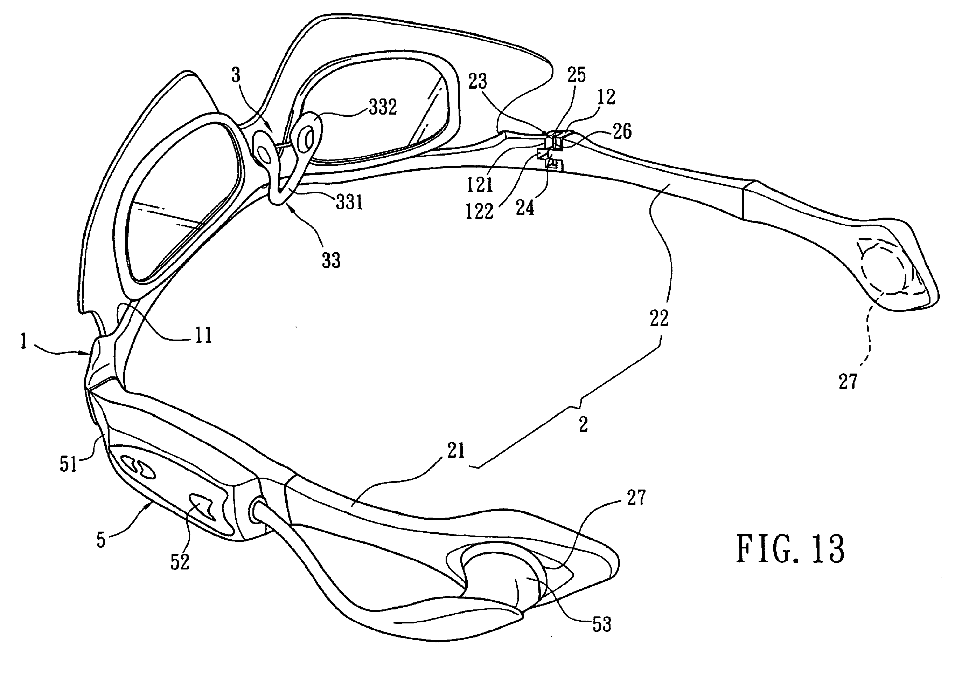

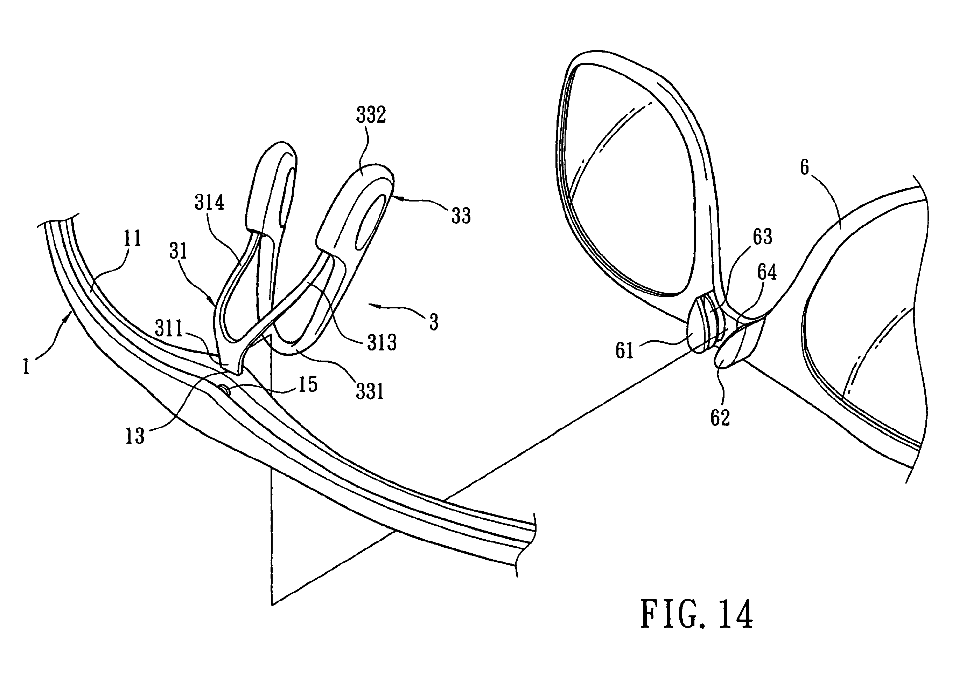

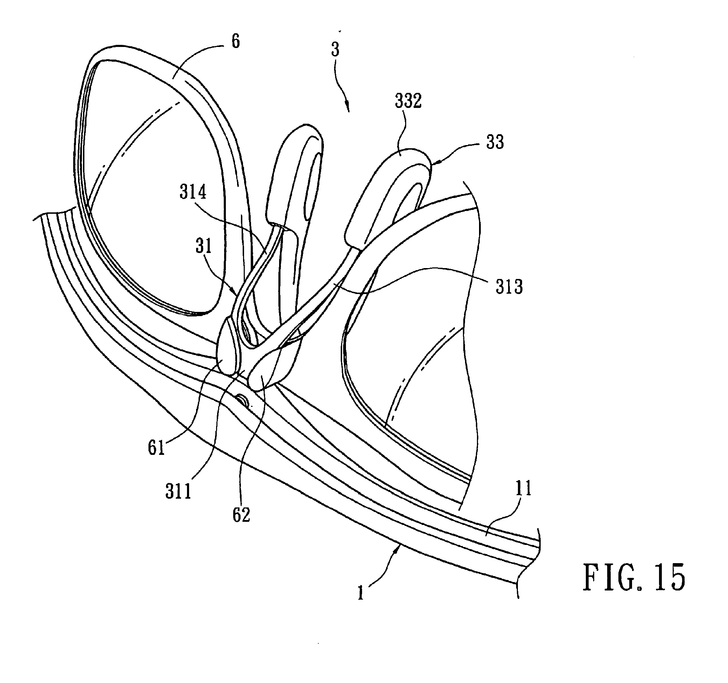

Referring to FIGS. 13~15, a supplementary eyeglass assembly **6** is detachably secured to the bracket **31** of the nose unit **3.** The supplementary eyeglass assembly **6** has two ribs **61** and **62** on the middle of the front side. Each rib **61** or **62** defines a coupling groove **63** or **64** for engagement with the bracket **31** of the nose unit **3.** Further, the supplementary eyeglass assembly **6** can be a pair of reading glasses, a pair of distant eyeglasses, or a pair of intermediate glasses.

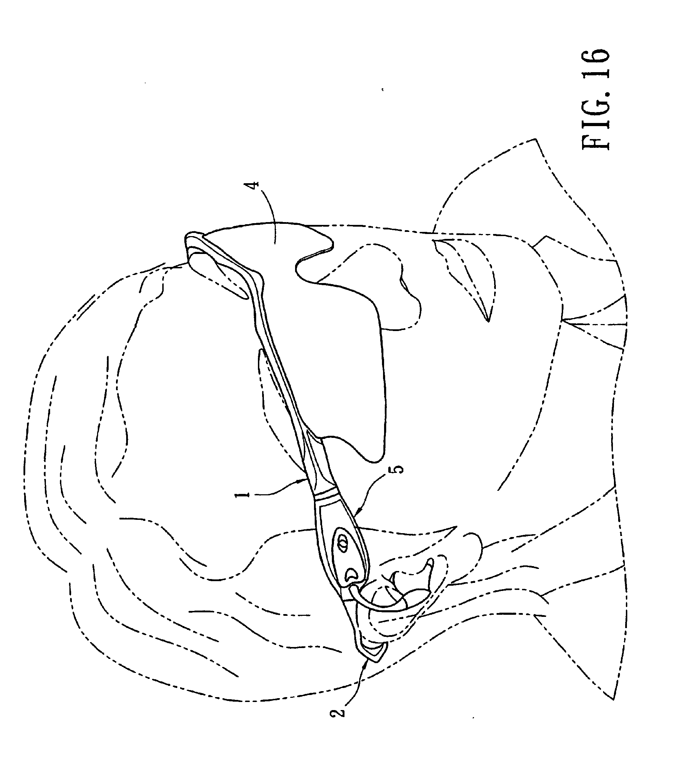

Referring to FIG. 16, when the user wears the eyeglasses, the earphone **53** of the wireless transceiver **5** is inserted into the corresponding ear so that the user can communication with a person at a remote side through the earphone **53** and the microphone of the wireless transceiver **5** via a cellular phone that is kept in the user's pocket.

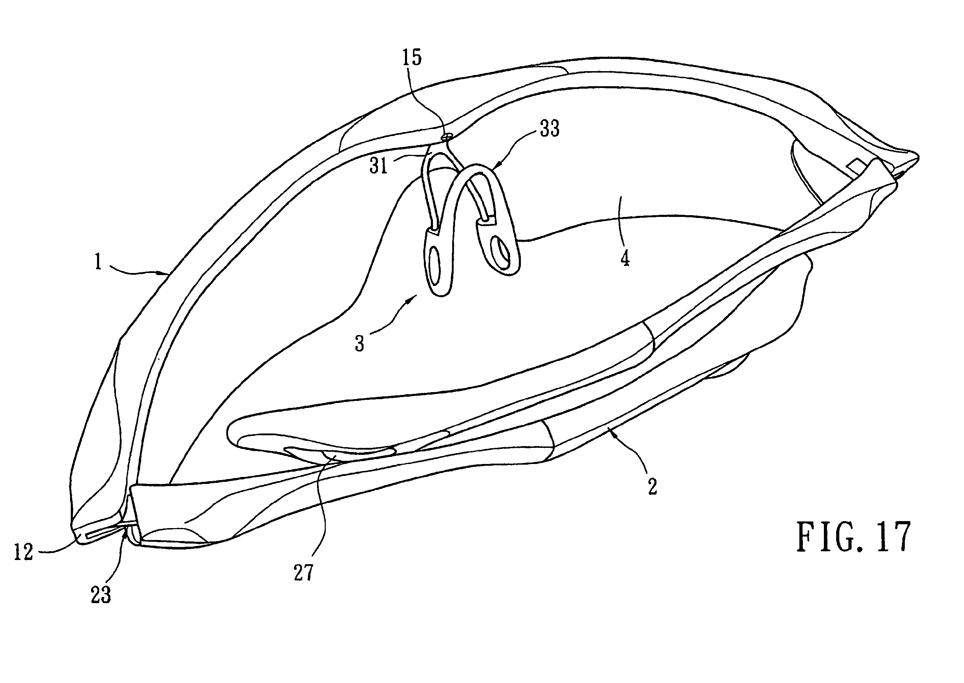

Referring to FIG. 17 and FIG. 16 again, the user can detach the first temple **21** with the wireless transceiver **5** from the eyeglass frame **1** and then attach another temple of same structure as the second temple **22** to the eyeglass frame **1** as a substitute, and therefore the eyeglasses is used as a regular eyeglasses or sunglasses without a wireless transceiver.

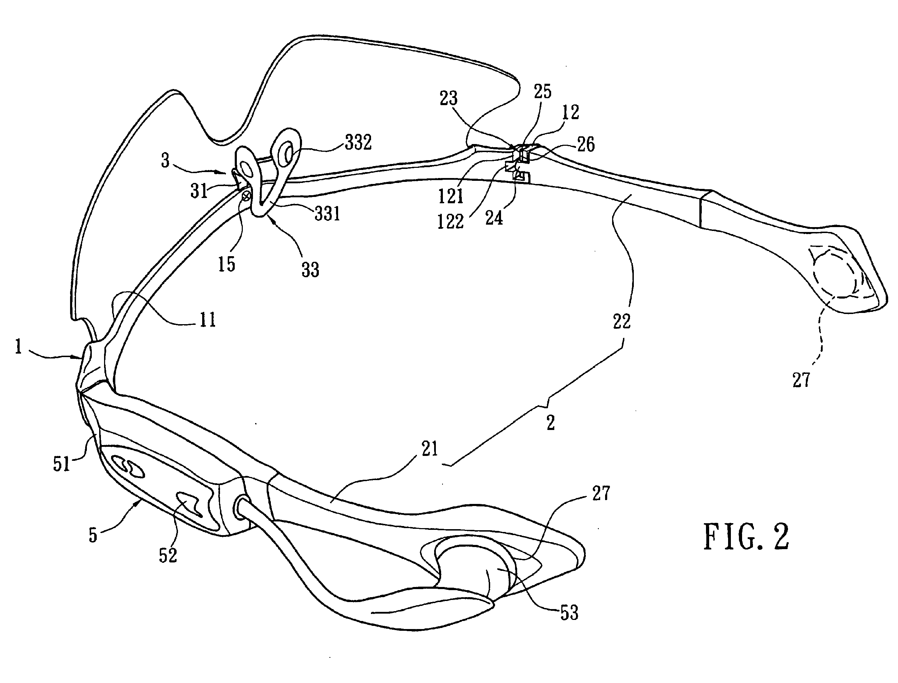

A prototype of eyeglasses with a wireless transceiver system has been constructed with the features of FIGS. 1~17. The eyeglasses with a wireless transceiver system functions smoothly to provide all of the features discussed earlier.

Although particular embodiments of the invention have been described in detail for purposes of illustration, various modifications and enhancements may be made without departing from the scope of the invention as defined by the appended claims.

## Claims

1. A pair of eyeglasses comprising:
an eyeglass frame (1), said eyeglass frame (1) having a mounting groove (11) at one side thereof, two coupling endpieces (12) respectively extended from two distal ends thereof, a plughole (13) on a middle part thereof adjacent to one side of said mounting groove (11), and a mounting through hole (14) extending across said mounting groove (11) in communication with one end of said plughole (13);
two temples (21) and (22), said temples each having a front end, a rear end opposite to said front end, a coupling block (23) extending from the front end and respectively pivotally coupled to the coupling endpieces of said eyeglass frame (1), and a recessed receiving hole (27) near said rear end;
a nose unit (3) fastened to the plughole (13) of said eyeglass frame (1), said nose unit having a through hole (14);
a screw (15) mounted in the mounting through hole (14) of said eyeglass frame (1) and the through hole (14) of said nose unit (3) to secure said nose unit (3) to said eyeglass frame (1);
an eyeglass lens (4), said eyeglass lens (4) having a ridge inserted into the mounting groove (11) of said eyeglass frame (1), a retaining notch (43) formed on a middle part of said ridge and forced into engagement with said screw (15), and two engagement protrusions (42) respectively extending from two distal ends of said ridge and respectively forced into engagement with two distal ends of said mounting groove (11) of said eyeglass frame (1);
**characterized in,**
a wireless transceiver (5) mounted on one of said temples (21) and (22),
wherein said wireless transceiver (5) comprises a casting (51) formed integral with one of said two temples (21) and (22), a set of control switches (52) mounted on said casing (51) for power on/off and voice volume controls, and an earphone (53) extending out of said casing (51), said casing (51) housing a wireless transmitter receiver chip, a rechargeable battery, a microphone, and a battery charger; and
when the earphone (53) is not in use, the user can set the earphone (53) in the recessed receiving hole (27).

2. The eyeglasses as claimed in claim 1, wherein said eyeglass frame (1) is a smoothly arched bar.

3. The eyeglasses as claimed in claim 1, wherein each coupling endpiece (12) of said eyeglass frame (1) has a vertical coupling hole (121) and a horizontal coupling hole (14) across said vertical coupling hole (121).

4. The eyeglasses as claimed in claim 2, wherein the coupling block (23) of each of said temples has a horizontal base (24) coupled to the horizontal coupling hole of the associating endpiece of said eyeglass frame (1), and two vertical pivot pins (25) coupled to the vertical coupling hole of the associating endpiece of said eyeglass frame (1), said vertical pivot pins (25) each having two cut planes (26) at two opposite sides.

5. The eyeglasses as claimed in claim 1, wherein said nose unit 3 comprises:
a metal bracket (31), said metal bracket (31) having a base frame (311) inserted into the plughole (13) of said eyeglass frame (1), the through hole (312) of said nose unit (3) cut through said base frame (311) and coupled to said screw (15), and two support rods (313) and (314) respectively symmetrically extending from a top side of said base frame (311);
two sleeves (32) molded from polycarbonate resin and respectively sleeved onto the support rods (313) and (314) of said bracket (31); and
a nose (33) made out of rubber, said nose having a middle saddle (331) for bridging the user's nose, and two nose pads (332) respectively formed integral with two ends of said middle saddle (311), said two nose pads (332) each having a coupling hole (333) respectively coupled to said sleeves (32) on said support rods (313) and (314) of said bracket (31).

6. The eyeglasses as claimed in claim 1, wherein said eyeglass lens (4) is a single-piece sunglass lens molded from a thermoplastic material.

7. The eyeglasses as claimed in claim 1, further comprising a supplementary eyeglasses detachably secured to the bracket (31) of said nose unit (3), said supplementary eyeglass assembly 6 having two ribs on a middle part of a front side thereof, said ribs (61) and (62) each having a coupling groove (63) and (64) respectively forced into engagement with the bracket (31) of said nose unit (3).

8. The eyeglasses as claimed in claim 1, further comprising a supplementary temple adapted to substitute for the temple carrying said wireless transceiver (5), said supplementary temple having same structure as said two temples (21) and (22).

9. The eyeglasses as claimed in claim 1, wherein said two temples (21) and (22) are exchangeably connectable to the two coupling endpieces (12) of said eyeglass frame 1.

## Patentansprüche

1. Ein Paar von Augengläsern, umfassend:
einen Augenglasrahmen (1), wobei der Augenglasrahmen (1) eine Montagenut (11) an einer seiner Seiten hat, sowie zwei Kopplungsendstücke (12), die sich von zwei distalen Enden davon erstrecken, ein Verschlussloch (13) benachbart zu einer der Montagenuten (11) an einem mittleren Teil davon, und ein Montagedurchgangsloch (14), das sich quer durch die Montagenut (11) in Kommunikation mit einem Ende des Verschlusslochs (13) erstreckt;
zwei Bügel (21) und (22), wobei die Bügel jeweils ein vorderes Ende, ein rückwärtiges Ende, das dem vorderen Ende gegenüberliegt, einen Kopplungsbereich (23), der sich von dem vorderen Ende erstreckt und schwenkbar mit den Kopplungsendstücken des Augenglasrahmens (1) gekoppelt ist, und ein eingelassenes Aufnahmeloch (27) in der Nähe des rückwärtigen Endes hat;
eine Naseneinheit (3), die an dem Verschlussloch (13) des Augenglasrahmens (1) befestigt ist, wobei die Naseneinheit ein Durchgangsloch (14) hat;
eine Schraube (15), die in dem Montagedurchgangsloch (14) des Augenglasrahmens (1) und dem Durchgangsloch (14) der Naseneinheit (3) montiert ist, um die Naseneinheit (3) an dem Augenglasrahmen (1) zu sichern;
eine Augenglaslinse (4), wobei die Augenglaslinse (4) einen Rand hat, der in die Montagenut (11) des Augenglasrahmens (1) eingesetzt ist, sowie eine Halteeinkerbung (43), die in einem mittleren Bereich des Randes gebildet wird und mit der Schraube (15) in Eingriff gezwungen wird, und zwei Eingriffsvorsprünge (42), die sich von den zwei distalen Enden des Randes erstrecken und in Eingriff mit zwei distalen Enden der Montagenut (11) des Augenglasrahmens (1) sind;
**gekennzeichnet durch**
einen drahtlosen Signalgeber (5), der auf einem der Bügel (21) und (22) montiert ist,
wobei der drahtlose Signalgeber (5) ein Gehäuse (51) aufweist, das integral mit einem der zwei Bügel (21) und (22) gebildet ist, sowie einen Satz von Steuerschaltern (52), die an dem Gehäuse (51) zum Ein- und Ausschalten von Energie und zur Stimmvolumensteuerung montiert sind, und einen Kopfhörer (53), der sich aus dem Gehäuse (51) erstreckt, wobei das Gehäuse (51) einen drahtlosen Signalgeber-Empfängerchip aufnimmt, sowie eine aufladbare Batterie, ein Mikrophon und eine Batterieladeeinrichtung; und
wenn der Kopfhörer (53) nicht in Benutzung ist, kann der Benutzer den Kopfhörer (53) in ein eingelassenes Aufnahmeloch (27) setzen.

2. Die Augengläser nach Anspruch 1, wobei der Augenglasrahmen (1) ein sanft bogenförmiger Balken ist.

3. Die Augengläser nach Anspruch 1, wobei jedes Kopplungsendstück (12) des Augenglasrahmens (1) ein vertikales Kopplungsloch (121) und ein horizontales Kopplungsloch (14) quer zu dem vertikalen Kopplungsloch (121) hat.

4. Die Augengläser gemäß Anspruch 2, wobei der Kopplungsbereich (23) eines jeden Bügels eine horizontale Basis hat, die mit den horizontalen Kopplungslöchern des verbundenen Endstücks des Augenglasrahmens (1) gekoppelt ist, und zwei vertikale Schwenkzapfen (25), die mit dem vertikalen Kopplungsloch des verbundenen Endstücks des Augenglasrahmens (1) gekoppelt sind, wobei die vertikalen Schwenkzapfen (25) jeweils zwei geschnittene Ebenen (26) an den zwei gegenüberliegenden Enden haben.

5. Die Augengläser gemäß Anspruch 1, wobei die Naseneinheit (3) aufweist:
eine Metallklammer (31), wobei die Metallklammer (31) einen Basisrahmen (311) hat, der in das Verschlussloch (13) des Augenglasrahmens (1) eingesetzt ist, wobei das Durchgangsloch (312) der Naseneinheit (3) durch den Basisrahmen (311) geschnitten und mit der Schraube (15) gekoppelt ist, und zwei Stützstangen (313) und (314), die sich symmetrisch von einer Oberseite des Basisrahmens (311) erstrecken;
zwei Hülsen (32), die aus Polykarbonat-Harz geformt sind und auf die Stützstangen (313) und (314) der Klammer (31) aufgehülst sind; und
eine Nase (33), die aus Gummi gemacht ist, wobei die Nase einen Mittelsattel (331) für das Überbrücken der Nase des Benutzers und zwei Nasenpads (332) aufweist, die integral mit den beiden Enden des Mittelsattels (311) geformt sind, wobei die zwei Nasenpads (332) jeweils ein Kopplungsloch (333) haben, das mit den Hülsen (32) auf den Stützstangen (313) und (314) der Klammer (31) gekoppelt ist.

6. Die Augengläser nach Anspruch 1, wobei die Augenglaslinse (4) eine einstückige Sonnenglaslinse ist, die aus einem thermoplastischen Material geformt ist.

7. Die Augengläser nach Anspruch 1, ferner umfassend ergänzende Augengläser, die lösbar an der Klammer (31) der Naseneinheit (3) gesichert sind, wobei die ergänzende Augenglasbaugruppe (6) zwei Rippen auf dem Mittelteil der Vorderseite davon hat, wobei die Rippen (61) und (62) jeweils eine Kopplungsnut (63) und (64) haben, die mit der Klammer (31) der Naseneinheit (3) in Eingriff gezwungen wird.

8. Die Augengläser nach Anspruch 1, ferner aufweisend einen ergänzenden Bügel, der daran angepasst ist, den Bügel zu ersetzen, der den drahtlosen Signalgeber (5) trägt, wobei der ergänzende Bügel dieselbe Struktur hat wie die zwei Bügel (21) und (22).

9. Die Augengläser gemäß Anspruch 1, wobei die zwei Bügel (21) und (22) austauschbar verbindbar mit den zwei Kopplungsendstücken (12) des Augenglasrahmens (1) sind.

## Revendications

1. Paire de lunettes comprenant :
une monture (1) de lunettes, ladite monture (1) de lunettes comportant une rainure (11) de montage d'un côté de celle-ci, deux éléments (12) d'extrémité d'accouplement s'étendant respectivement des deux extrémités distales de celle-ci, un trou (13) d'enfichage sur une partie centrale de celle-ci adjacent à un côté de ladite rainure (11) de montage, et un trou (14) traversant de montage s'étendant de part et d'autre de ladite rainure (11) de montage en communication avec une extrémité dudit trou (13) d'enfichage ;
deux branches (21) et (22), lesdites branches comportant chacune une extrémité avant, une extrémité arrière opposée à ladite extrémité avant, un bloc (23) d'accouplement s'étendant de l'extrémité avant et respectivement accouplé de manière pivotante aux éléments d'extrémité d'accouplement de ladite monture (1) de lunettes, et un trou (27) de réception fraisé à proximité de ladite extrémité arrière ;
une unité (3) de nez fixée au trou (13) d'enfichage de ladite monture (1) de lunettes, ladite unité de nez comportant un trou (14) traversant ;
une vis (15) montée dans le trou (14) traversant de montage de ladite monture (1) de lunettes et le trou (14) traversant de ladite unité (3) de nez pour fixer ladite unité (3) de nez à ladite monture (1) de lunettes ;
un verre (4) de lunettes, ledit verre (4) de lunettes comportant une nervure insérée dans la rainure (11) de montage de ladite monture (1) de lunettes, une encoche (43) de retenue formée sur une partie centrale de ladite nervure et mise en prise de force avec ladite vis (15), et deux protubérances (42) de mise en prise s'étendant respectivement des deux extrémités distales de ladite nervure et respectivement mises en prise de force avec les deux extrémités distales de ladite rainure (11) de montage de ladite monture (1) de lunettes ;
**caractérisée par**,
un émetteur-récepteur (5) sans fil monté sur l'une desdites branches (21) et (22),
dans laquelle ledit émetteur-récepteur (5) sans fil comprend un boîtier (51) formé d'un seul tenant avec l'une desdites deux branches (21) et (22), un ensemble de commutateurs (52) de commande montés sur ledit boîtier (51) pour les commandes de marche/arrêt et de volume de voix, et un écouteur (53) s'étendant hors dudit boîtier (51), ledit boîtier (51) logeant une puce d'émetteur/récepteur sans fil, une batterie rechargeable, un microphone et un chargeur de batterie ;
et
lorsque l'écouteur (53) n'est pas utilisé, l'utilisateur peut placer l'écouteur (53) dans le trou (27) de réception fraisé.

2. Lunettes selon la revendication 1, dans lesquelles ladite monture (1) de lunettes consiste en une barre régulièrement cintrée.

3. Lunettes selon la revendication 1, dans lesquelles chaque élément (12) d'extrémité d'accouplement de ladite monture (1) de lunettes comporte un trou (121) d'accouplement vertical et un trou (14) d'accouplement horizontal en travers dudit trou (121) d'accouplement vertical.

4. Lunettes selon la revendication 2, dans lesquelles le bloc (23) d'accouplement de chacune desdites branches comporte une base (24) horizontale accouplée au trou d'accouplement horizontal de l'élément d'extrémité d'association de ladite monture (1) de lunettes, et deux broches (25) de pivotement verticales accouplées au trou d'accouplement vertical de l'élément d'extrémité d'association de ladite monture (1) de lunettes, lesdites broches (25) de pivotement verticales comportant chacune deux plans (26) découpés sur deux côtés opposés.

5. Lunettes selon la revendication 1, dans lesquelles ladite unité (3) de nez comprend :
un support (31) métallique, ledit support (31) métallique comportant un cadre (311) de base inséré dans le trou (13) d'enfichage de ladite monture (1) de lunettes, le trou (312) traversant de ladite unité (3) de nez usiné à travers ledit cadre (311) de base et accouplé à ladite vis (15), et deux tiges de support (313) et (314) s'étendant respectivement symétriquement d'un côté supérieur dudit cadre (311) de base ;
deux manchons (32) moulés en une résine de polycarbonate et gainant respectivement les tiges de support (313) et (314) dudit support (31) ; et
un nez (33) réalisé en caoutchouc, ledit nez comportant une voûte (331) centrale pour passer au-dessus du nez de l'utilisateur, et deux plaquettes (332) de lunettes respectivement formées d'un seul tenant avec les deux extrémités de ladite voûte (311) centrale, lesdites deux plaquettes (332) de lunettes comportant chacune un trou (333) d'accouplement respectivement accouplé auxdits manchons (32) sur lesdites tiges de support (313) et (314) dudit support (31).

6. Lunettes selon la revendication 1, dans lesquelles ledit verre (4) de lunettes consiste en un verre de lunettes de soleil en une seule pièce moulé en un matériau thermoplastique.

7. Lunettes selon la revendication 1, comprenant en outre des lunettes supplémentaires fixées de manière détachable au support (31) de ladite unité (3) de nez, ledit ensemble (6) de lunettes supplémentaires comportant deux nervures sur une partie centrale d'un côté avant de celui-ci, lesdites nervures (61) et (62) comportant chacune une rainure d'accouplement (63) et (64), respectivement mise en prise de force avec le support (31) de ladite unité (3) de nez.

8. Lunettes selon la revendication 1, comprenant en outre une branche supplémentaire adaptée pour remplacer la branche supportant ledit émetteur-récepteur (5) sans fil, ladite branche supplémentaire ayant la même structure que lesdites deux branches (21) et (22).

9. Lunettes selon la revendication 1, dans lesquelles lesdites deux branches (21) et (22) peuvent être reliées de manière échangeable aux deux éléments (12) d'extrémité d'accouplement de ladite monture (1) de lunettes.
